# EUROPÄISCHE PATENTSCHRIFT

(11) **EP 1 882 812 B1**
(45) Veröffentlichungstag und Bekanntmachung des Hinweises auf die Patenterteilung: **07.05.2014**
(21) Anmeldenummer: 07450130.5
(22) Anmeldetag: 24.07.2007
(51) Int. Cl.: E21D 11/10

(54) **Vorrichtung und Verfahren zum Auftragen einer abbindbaren Schicht auf Wandungen von Bauteilen**
Device and method for applying a settable layer to cladding of building elements
Dispositif et procédé destinés à l'application d'une couche retirable sur des éléments de construction

(30) Priorität: 25.07.2006 AT 12642006
(43) Veröffentlichungstag der Anmeldung: 30.01.2008
(73) Patentinhaber: Porr Tunnelbau GmbH, 1103 Wien (AT)
(72) Erfinder: Haberland, Christof, 2371 Hinterbrühl (AT)
(74) Vertreter: Itze, Peter

(56) Entgegenhaltungen:
- EP-B1- 0 215 243
- JP-A- 60 051 299
- JP-A- 63 226 496

## Beschreibung

Die Erfindung bezieht sich auf eine Vorrichtung und ein Verfahren zum Auftragen einer abbindbaren Schicht, z. B. mit einer Mischung mit einem anorganischen Bindemittel, Zuschlagsstoffe und Wasser auf Wandungen von Bauteilen sowie auf ein Verfahren zum Auftragen.

Eines der am meisten eingesetzten Verfahren zur Beschichtung von Wandungen mit einer Mischung mit den Hauptbestandteilen Zement, Zuschlagsstoffen und Wasser ist das so genannte Spritzbetonverfahren. Hierbei wird ohne Schalung auf eine Wandung eine Schicht aufgebracht. Man hat zwischen zwei prinzipiell unterschiedlichen Verfahren zu unterscheiden, u. zw. dem Trockenverfahren, bei dem ein, insbesondere weitgehend trockenes Gemisch aus Zuschlagsstoffen, Bindemittel, z. B. Zement und anderen trockenen Zusätzen, gemeinsam mit einem Luftstrom zu einer Düse geleitet wird. In dieser Düse erfolgen der Zusatz der flüssigen Betonzusatzmittel und des Wassers. Das andere Verfahren ist das so genannte Nassspritzverfahren, wobei ein Gemisch aus Zement, Zuschlagsstoffen, Wasser und gegebenenfalls Zusätzen in die Förderleitung und anschließend in die Düse eingebracht wird. Es können sowohl beim Trockenverfahren als auch beim Nassverfahren weitere Zusätze, insbesondere Fasern, seien es Kunststofffasern oder Fasern, die die Festigkeit vergrößern sollen, wie beispielsweise Kohlenstofffasern oder Stahlfasern, zugesetzt werden. Die Wirtschaftlichkeit des Spritzverfahrens ist dadurch gegeben, dass aufwendige Schalungen nicht erforderlich sind.

Ein Nachteil des Spritzverfahrens besteht darin, dass keine glatten Oberflächen erhalten werden, wodurch ein Weiterarbeiten, z. B. mit Anstrichen, wesentlich erschwert wird.

Weiters liegen große Unterschiede der Schichtstärke vor, so dass ein größerer Auftrag erfolgen muss, wodurch z. B. bei einer Tunnelsanierung der freie Tunnelquerschnitt wesentlich verkleinert wird.

Bei Mischungen mit Zuschlagsstoffen und Kalk als hydraulisches Bindemittel ist es bekannt, nach der Aufbringung der Beschichtung eine Glättung entweder manuell oder maschinell durchzuführen.

Bei Spritzbeton ist es bekannt, mit einem aufwendigen Verfahren diesen mit einem Lineal abzuziehen und dann eine weitere Schicht Spritzbeton aufzubringen.

Aus der EP 0 215 243 B1, von welchem Stand der Technik die vorliegende Erfindung ausgeht, wird eine Vorrichtung und ein Verfahren zum Aufspritzen einer abbindfähigen Schicht auf Wandungen bekannt. Die Vorrichtung weist eine Schalung in Form eines endlosen umlaufenden Bandes auf, welches in Abstand zu der zu beschichtenden Wand bewegt wird. Die Bewegung und Geschwindigkeit des Bandes stimmt mit der Bewegungsrichtung und der Geschwindigkeit der Vorrichtung entlang der Wandung überein. Zwischen der Wandung und dem endlosen Band wird ein Hohlraum gebildet, in welchen die Spritzbetonschicht eingebracht wird. Um eine Glättung der auf die Wandung aufgebrachten Schicht zu erreichen, sind verschiedene Mittel, beispielsweise Rollen, vorgesehen, welche das Band gegenüber der Beschichtung in Vibration versetzen. Das mit dieser Vorrichtung ausgeübte Verfahren weist verschiedene Nachteile auf. Der Strahl des Spritzbetons kann nur in einem flachen Winkel auf die zu beschichtende Fläche gerichtet werden, womit nicht die erwünschte Verdichtung erreicht werden kann. Weiters entstehen mit einer Verdichtung der aufgebrachten Beschichtung zwangsweise Lunker, da die Beschichtung im Bereich zwischen Wandung und endlosem Band aufgebracht wird, da bei einer Verdichtung nicht ausreichendes Material für die Beschichtung vorliegt. Weiters kann die erwünschte Oberflächengüte nicht erreicht werden, da das endlose Band vom Spalt, in welchen die Mischung eingebracht wird, in Bewegungsrichtung der Vorrichtung sich erweiternd ausgebildet ist, so dass lediglich am Beginn des Bandes eine Egalisierung durchgeführt werden könnte.

Der vorliegenden Erfindung ist es zur Aufgabe gestellt, eine Vorrichtung und ein Verfahren für die Herstellung einer abbindbaren Schicht bei im Wesentlichen flächigen, z. B. ebenen, Wandungen zu schaffen, welche eine einfache Automatisierung des Aufbringens der Schicht ermöglicht. Weiters soll die Schicht besonders hoch verdichtet werden können und keine Lunker aufweisen.

Weitere Aufgaben bestehen darin, eine besonders glatte Oberfläche der Schicht sowie eine einheitliche Schichtdicke zu erhalten.

Die erfindungsgemäße Vorrichtung zum Auftragen einer abbindbaren Schicht mit einer Oberfläche, z. B. mit einer Mischung mit einem anorganischen Bindemittel, Zuschlagsstoffe und Wasser auf Wandungen von Bauteilen, insbesondere Stollen- und/oder Tunnelwandungen, mit einem flexiblen Schlauch, einem in Abstand und entlang der Wandung in zumindest eine Richtung bewegbaren und umlaufbaren und an Rollen umgelenkten endlosen Band mit einer Arbeitsfläche, besteht im Wesentlichen darin, dass benachbart zu den Rollen und außerhalb des endlosen Bandes Klingen vorgesehen sind, die sich im Wesentlichen über eine gesamte Breite des Bandes erstrecken, und mit ihren freien Enden zur Wandung weisen und zur Oberfläche der Schicht vor und nach dem Band reichen. Vorrichtungen zum Auftragen abbindbarer Beschichtungen, die über einen flexiblen Schlauch, insbesondere mit Düse, an eine Wandung abgegeben werden, weisen den Vorteil auf, dass der Arbeitsvorgang des Aufbringens wesentlich reduziert werden kann, wobei weiters keine Schalung zur Begrenzung der Beschichtung erforderlich ist. Ist in Abstand und entlang der Wandung in zumindest eine Richtung bewegbar ein endloses Band vorgesehen, so kann eine reibende Bearbeitung der Oberfläche der Mischung, die die Beschichtung auf der Wandung bilden soll, erfolgen.

Unter einem endlosen Band ist z. B. auch eine Raupe, also eine Gleiskette od. dgl. zu verstehen, bei welcher die einzelnen Raupenteile, die sich über die gesamte Breite der Vorrichtung erstrecken, miteinander, beispielsweise über Achsen, verbunden sind.

Sind benachbart zu den Rollen, an welchen das endlose Band umgelenkt wird, Klingen vorgesehen, die sich im Wesentlichen, insbesondere ungeteilt, über eine gesamte Breite des Bandes erstrecken, so kann von der vor dem Band verlaufenden Klinge ein Abgleichen der Schichtdicke vor dem endlosen Band erfolgen, womit in den Hohlraum zwischen Wandung und Band eine in ihrer Dicke und Beschaffenheit einheitliche Schicht eintritt und der folgende Reibvorgang mit besonderer Güte erfolgen kann. Die dem Band nachlaufende Klinge reicht zur Oberfläche der Schicht und glättet dieselbe nach dem Reibvorgang.

Ist die Klinge, die in Richtung der Bewegung der Vorrichtung gesehen vor dem endlosen Band angeordnet ist, eine Rakel, so kann auch bei größerem mechanischen Widerstand, z. B. durch größere Körner im Zuschlag, eine Egalisierung erreicht werden, da Rakeln starr ausgebildet sind.

Endigt das freie Ende der Klinge, die in Richtung der Bewegung der Vorrichtung gesehen vor dem endlosen Band angeordnet ist, vor der verlängerten Arbeitsfläche des Bandes, so kann in den Hohlraum zwischen der Arbeitsfläche des Bandes und der Wandung Material in ausreichender Menge eingebracht werden, so dass mit dem Reibvorgang auch noch eine zusätzliche Verdichtung der Schicht bewirkt werden kann.

Ist das freie Ende der Klinge in Bewegungsrichtung der Vorrichtung vor dem Band angeordnet quer zur Bewegungsrichtung der Vorrichtung und parallel zu der Oberfläche der Schicht hin und her bewegbar, so kann eine besonders gute Egalisierung der Oberfläche der Schicht erreicht werden, da durch diese Bewegung größere Körner der Zuschlagsstoffe in die Schicht eingedrückt werden können ohne die Oberfläche durch eingedrückte Rillen zu beeinträchtigen.

Ist die in Richtung der Bewegung der Vorrichtung gesehen nach dem Band angeordnete Klinge in Richtung zur Oberfläche der Schicht federnd ausgebildet, so kann erreicht werden, dass lediglich mit einem sehr geringen Andruck an die Oberfläche der Schicht eine Egalisierung eintritt, wobei durch die Federung geringfügige Widerstände leicht ausgeglichen werden können.

Ist die federnde Klinge an ihrem freien Ende in Bewegungsrichtung der Vorrichtung gebogen, so dass die Klinge mit einer Rundung an der Schicht anlegbar ist, so kann ein besonders geringer Anpressdruck an die Schicht erreicht werden.

Weist die Vorrichtung mit dem endlosen Band eine Querführung auf, entlang welcher der Schlauch gegebenenfalls mit Düse quer zur Bewegungsrichtung der Vorrichtung hin und her bewegbar ist, so kann eine Automatisierung besonders einfach erreicht werden, wobei ein besonders gleichmäßiges Auftragen der Mischung ermöglicht wird. Es kann durch die Bewegung des Schlauches, z. B. über einen hydraulischen Zylinder/Kolben-Antrieb eine Grobeinstellung der Menge erfolgen, und durch eine Steuerung der geförderten Menge, z. B. durch Änderung der Luftmenge, eine Feinjustierung erfolgen.

Ist die Vorrichtung mit dem Band mit der Führung um eine Achse, die quer zur Führung verläuft und zur Wandung weist, insbesondere um 180° drehbar verbunden, so kann die Einrichtung durch einfaches Verdrehen um 180° auf beiden Seiten des Tunnels zum Einsatz gelangen, wobei bei einer Drehung um 90° eine Beschichtung im Bodenbereich auf beiden Seiten des Bauteils bzw. des Tunnels od. dgl. erfolgen kann.

Ist zumindest an einer Seite des endlosen Bandes eine Begrenzung, die sich in Bewegungsrichtung der Vorrichtung erstreckt für die zu bildende Schicht vorgesehen, so kann einerseits ein Anschluss der Beschichtung an die bereits abgelagerte Schicht erreicht werden, und gleichzeitig eine klare Abgrenzung der Beschichtung gegenüber der neu abzulagernden Schicht erreicht werden, so dass eine besonders exakte Ablagerung erreicht werden kann, wobei gleichzeitig eine zu große Menge an der Mischung an der Wandung vermieden werden kann.

Ist die Vorrichtung mit dem endlosen Band entlang einer Führung, die sich insbesondere über einen, vorzugsweise gesamten, Querschnitt des Bauteils, Stollens oder Tunnels erstreckt, bewegbar, so kann auf besonders einfache Art und Weise eine Steuerung durchgeführt werden.

Ist die Vorrichtung mit dem endlosen Band über einen Halter entlang der Führung bewegbar, mit welchem dieselbe über einen Zylinder/Kolben-Antrieb zur und von der Wandung bewegbar ist, so kann mit einer einzigen Führung eine Anpassung an die unterschiedlichen Querschnitte eines Bauteils, Tunnels oder Stollens od. dgl. erfolgen, da der erwünschte Abstand des flexiblen Schlauches bzw. der Düse desselben immer eingehalten werden kann, da beispielsweise über eine Steuerung mit Datenverarbeitungsanlage jeweils der erforderliche Abstand durch den Zylinder/KolbenAntrieb einfach eingehalten werden kann. Damit kann mit einer einzigen Führung eine Anpassung an die unterschiedlichen Querschnitte erfolgen. Wie bekannt, ist ein Tunnel nicht im Querschnitt teilkreisförmig, sondern weist eine sich ändernde Krümmung auf. Weiters können auch Tunnel mit unterschiedlicher Quererstreckung mit ein und derselben Führung einer Beschichtung unterworfen werden. Eine Beschichtung von unterschiedlichen Bauteilen wird dadurch wesentlich erleichtert.

Ist die Führung auf Rädern entlang einer Hohlraumachse des Bauteils, der Stollen- oder Tunnelachse bewegbar, so ist eine besonders flexible Ausführungsform gegeben, die gleichzeitig einen geringen Aufwand innerhalb der Stollen oder Tunneln erforderlich macht, da keine Schienen od. dgl. vorgesehen werden müssen.

Rollen die Räder direkt am Boden des Bauteils, Stollens bzw. Tunnels, so sind keine zusätzlichen Vorrichtungen für den Transport erforderlich, und es kann ein Selbstfahrer vorliegen.

Die Führung kann auch mit einem Schreitwerk fortbewegt werden, wobei eine sehr einfache Justierung erreicht werden kann.

Ist für die Ausrichtung der Bewegung der Führung eine Leiteinrichtung und/oder ein Leitmedium vorgesehen, so kann eine besonders exakte Ausrichtung erfolgen.

Ist die Vorrichtung mit zumindest einer weiteren Einheit, z. B. einer Wasserstrahleinheit, mit zumindest einer bewegbaren Düse verbunden, so kann vor der Aufbringung der Schicht eine Vorbereitung der Wandung auf besonders einfache Art und Weise erfolgen.

Ist der weiteren Einheit mit zumindest einer Wasserstrahleinrichtung eine Einheit zum Abbau von Einbauten, z. B. in Stollen und/oder Tunnel, in Bewegungsrichtung gesehen vorgeschaltet, so kann eine besonders einfache Mechanisierung des Abbaues und zur erneuten Ertüchtigung eines Bauteils, Tunnels oder Stollen erreicht werden.

Ist zwischen der Einheit mit der Wasserstrahleinrichtung und der Vorrichtung mit dem endlosen Band eine Einheit für die Befestigung einer Bewehrung vor der Wandung, insbesondere mit Dübel, vorgesehen, so kann eine Beschichtung mit mehrfacher Sicherheit mit der Mischung durchgeführt werden, da die Bewehrung den Zusammenhalt der Mischung erhöht und die Dübel den Halt der unerhärteten und erhärteten Schicht neben der Adhäsion derselben an der Wandung zusätzlich mechanisch gewährleistet.

Ist der Abstand der Rollen zueinander veränderlich und/oder mit einer Spannrolle das Band ablenkbar, und eine weitere Rolle zwischen diesen vorgesehen, welche gegen das Band drückbar ist, wodurch eine Formgebung des Bandes gegen die Wandung durchführbar ist, so kann eine besonders einfache Anpassung an die erwünschte Schichtstärke zwischen der Arbeitsfläche und der aktuellen Wandung erfolgen, wobei eine Deformation des Bandes gegenüber der Wandung eintritt, die eine zu große Schichtstärke und damit einen übergroßen Materialverbrauch und zu geringen Querschnitt, z. B. des Tunnels, verhindert.

Ist der Abstand der Rollen zueinander veränderlich und/oder mit einer Spannrolle das Band ablenkbar, und zwischen diesen eine am Band anliegende elastische Platte vorgesehen, so kann die Arbeitsfläche des Bandes einfach in ihrer Krümmung verändert werden, wobei der Anpressdruck des Bandes entlang der gesamten Länge der Platte gleichgehalten werden kann, und eine Anpassung der Krümmung der Arbeitsfläche an den aktuellen Querschnitt, z. B. des Stollens oder Tunnels, einfach erreicht werden kann.

Greift zumindest ein Zylinder/Kolben-Antrieb an die Platte, insbesondere an den Endbereichen, gesehen in Bewegungsrichtung der Vorrichtung, der Platte an, so kann eine besonders einfache Formgebung der Platte und damit der Arbeitsfläche erreicht werden, wobei durch eine höhere Anzahl der Zylinder/Kolben-Antriebe unterschiedliche Formgebungen der Arbeitsfläche erreicht werden können.

Das erfindungsgemäße Verfahren zum Beschichten, insbesondere Verfestigen, von Wandungen von Bauteilen, insbesondere Stollen- und/oder Tunnelwandungen, wobei eine abbindbare Mischung mit anorganischen Bindemitteln, Zuschlagsstoffen und Wasser gegen die Wandung geschleudert wird, und eine an der Wandung haftende Beschichtung gebildet wird, die mit einer zumindest in eine Richtung entlang der Wandung bewegten Vorrichtung mit einem umlaufenden endlosen Band mit Arbeitsfläche begrenzt wird, besteht im Wesentlichen darin, dass die Mischung in einer Schichtstärke aufgebracht wird, die größer als ein Normalabstand zwischen Wandung und der Arbeitsfläche des endlosen Bandes ist, und die Beschichtung vor und nach dem endlosen Band, insbesondere mit Klingen, egalisiert wird.

Durch das umlaufende endlose Band alleine, das entlang der Wandung bewegt wird, kann eine Aufnahme für die Beschichtung gebildet werden, die allerdings, wie bereits ausgeführt, nicht geeignet ist, eine regelmäßige, glatte Beschichtung zu bilden.

Wird die Mischung in einer Schichtstärke aufgebracht, die größer als ein Normalabstand zwischen Wandung und endlosem Band ist, so ist ausreichendes Material vorgesehen, dass gegebenenfalls verursachte Lockerstellen, beispielsweise durch herausfallende große Zuschlagsstoffe, ergänzt werden können, wodurch der Strahl relativ steil auf die Wandung gerichtet werden kann. Mit der Egalisierung der Beschichtung vor dem endlosen Band kann verhindert werden, dass in den Spalt zwischen Wandung und Band zu viel Material eingebracht wird, wodurch eine unregelmäßige Oberfläche auftritt. Mit der Klinge nach dem endlosen Band kann eine Egalisierung erreicht werden, für welche lediglich geringe Kräfte erforderlich sind, so dass eine besonders gute Oberflächenbeschaffenheit erreichbar ist.

Beträgt die Geschwindigkeit des umlaufenden Bandes einschließlich der der Vorrichtung gegenüber der an der Wandung haftenden Schicht 0,2 bis 1,0 m/sec, so können besonders einfach Schichten unterschiedlicher Stärke aufgebracht und egalisiert werden.

Wird in Bewegungsrichtung der Vorrichtung gesehen vor dem endlosen Band eine Schichtstärke egalisiert, die größer als der Normalabstand der Arbeitsfläche zur Wandung ist, so kann eine ausreichende Zufuhr der Mischung in den Hohlraum zwischen Arbeitsfläche und Wandung sichergestellt werden, wodurch einerseits eine Verdichtung der Schicht erreicht wird und andrerseits eine besonders gute Bearbeitung der Oberfläche durch Reiben sichergestellt ist.

Wird das benachbart zur Wandung des umlaufenden endlosen Bandes entgegengesetzt zur Bewegungsrichtung der Vorrichtung mit dem umlaufenden Band bewegt, so kann eine besonders gute Oberflächenbearbeitung durch Reiben erreicht werden.

Wird die Arbeitsfläche in etwa parallel zur Wandung geführt, so tritt lediglich eine Verdichtung der Schicht beim Eintritt derselben zwischen Wandung und Arbeitsfläche auf, und es besteht die Möglichkeit, entlang der gesamten Arbeitsfläche den Reibvorgang durchzuführen.

Die Mischung kann auch in die Richtung entgegengesetzt zur Schwerkraft aufgebracht werden, so dass beispielsweise der Firstbereich eines Tunnels bearbeitet werden kann.

Im Folgenden wird die Erfindung anhand der Zeichnungen und der Beispiele näher erläutert.

Es zeigen:
Fig. 1 und 3 die Vorrichtung mit dem endlosen Band in Seitenansicht und Ansicht von oben,

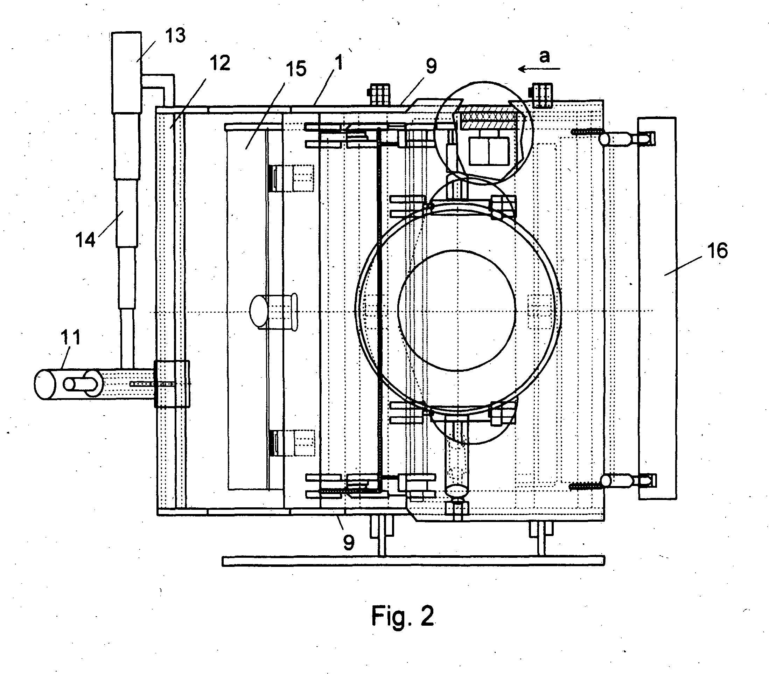

Fig. 2 die Vorrichtung mit Platte in Sicht von oben und
Fig. 4 eine Führung für die Vorrichtung mit dem endlosen Band in einem Tunnel.

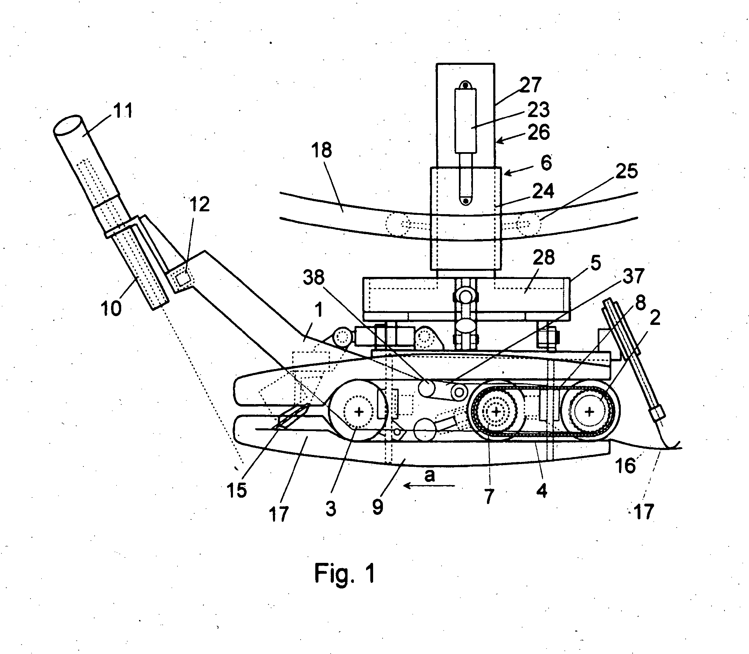

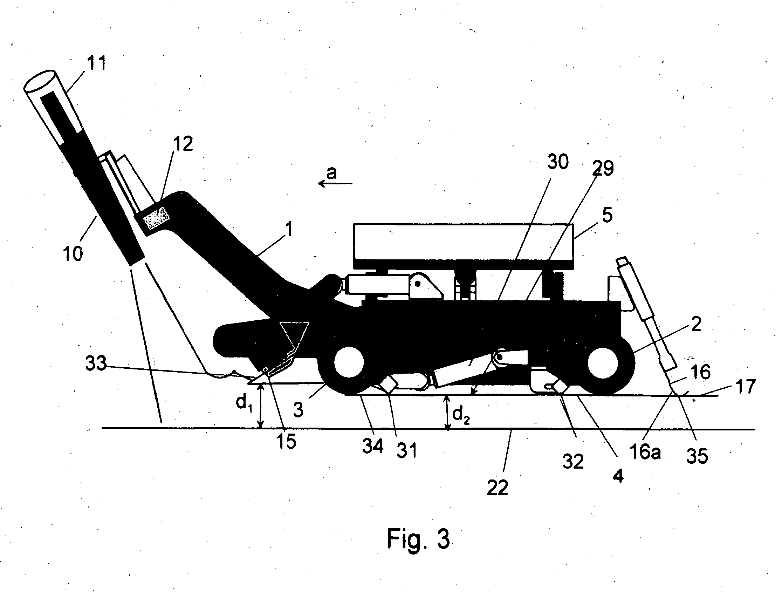

Wie aus den Figuren 1 und 3 ersichtlich, weist die Vorrichtung einen Rahmen 1 auf, in welchem die Rollen 2, 3 gelagert sind. An den Rollen 2, 3 wird ein endloses Band 4 umgelenkt. Das endlose Band kann beispielsweise mit flexiblem Kunststoff faserverstärkt, beispielsweise durch eine Schicht aus Wirrfaserflies in Art wie Förderbänder aufgebaut sein, aus Edelstahl oder anderen Materialien bestehen. Auch besteht die Möglichkeit, das endlose Band als Raupe, also als Gleiskette, auszubilden, bei welcher die einzelnen Raupenteile, die sich über die gesamte Breite der Vorrichtung erstrecken, miteinander, beispielsweise über Achsen, verbunden sind. Der Rahmen weist weiters eine zylinderförmige Aufnahme 5 auf, in welcher ein Halter 6 eingreift, so dass die Vorrichtung mit dem endlosen Band in der Aufnahme gedreht werden kann, womit jede beliebige Stellung des Bandes zur Wandung, bezogen auf die Bewegungsrichtung a, erreicht werden kann. Zwischen den Rollen 2 und 3 ist ein elektrischer Antrieb 7 vorgesehen, der über eine Kette 8 die Rolle 2 antreibt und somit das Band in Bewegung hält. Die Vorrichtung ist in Richtung des Pfeils a entlang der Führung 18 bewegbar, wohingegen das Band in entgegen gesetzte Richtung bewegbar ist. Der Halter 6 weist einen hydraulischen Antrieb 23 auf, welcher mit dem Wagen 24, der Rollen 25 aufweist, über welche der Wagen 24 im U-förmigen Profil der Führung 18 bewegt werden kann und dem Teleskoprohr 27 verbunden ist. Im Wagen 24 ist ein Halteteil 26 vorgesehen, der ein Teleskoprohr 27 trägt, dessen zur Vorrichtung weisendes Ende ebenfalls eine zylindrische Aufnahme 28 aufweist, die in die Aufnahme 5 eingreift. Die gesamte Vorrichtung kann über diese beiden Aufnahmen, wie bereits ausgeführt, gedreht werden. Mit einer Drehung um 90°, bezogen auf die Bewegungsrichtung a kann die Vorrichtung am Boden eines Tunnels od. dgl. so positioniert werden, dass unmittelbar an den am Boden anschließenden Bereich eine Beschichtung durchgeführt werden kann. Hierbei werden allerdings die Führungen 18 in Tunnellängsrichtung bewegt, so dass die gesamte Vorrichtung entlang des Tunnels verfahren wird. Eine Drehung um 180° ist dann erforderlich, wenn mit ein und derselben Vorrichtung beide Seiten eines Tunnels beschichtet werden soll. Über den hydraulischen Zylinder/Kolben-Antrieb 23 ist der Halteteil 26 mit dem Teleskoprohr 27 quer zur Führung 18 bewegbar, so dass die gesamte Vorrichtung zu oder von der Tunnelwandung bewegt werden kann. Bei einer Steuerung des hydraulischen Zylinderkolbenantriebes, z. B. mit einer Datenverarbeitungsanlage, kann die genaue Position der Vorrichtung, bezogen auf die Tunnelwandung, erreicht werden. Weiters besteht die Möglichkeit, dass mit einer Ausführungsform der Führung eine Anpassung an unterschiedliche Tunnelquerschnitte erfolgen kann, da lediglich ein Verfahren der Vorrichtung zur oder von der Tunnelwandung erforderlich ist.

Der elektrische Antrieb des Bandes ist als weitere Rolle ausgebildet, die gegen das Band drückbar ist, so dass eine Anpassung des Bandes an die Rundung der Tunnelwandung 22 leicht möglich ist. Gleichzeitig kann der Abstand der Rollen 2, 3 verringert oder vergrößert werden. Anstelle oder zusätzlich zur Änderung des Abstandes der Rollen 2 und 3 kann das endlose Band über eine Spannrolle 38 und einem hydraulischen Zylinder/Kolben-Antrieb 37 unter Berücksichtigung der Krümmung des Bandes abgelenkt und gespannt gehalten werden. Beim endlosen Band ist beidseits eine Begrenzung 9 vorgesehen, die Bestandteil des Rahmens 1 ist. Durch diese Begrenzung wird sichergestellt, dass die aufzubringende Schicht 17 einen exakten Streifen bildet. Gegebenenfalls kann auch nur eine Begrenzung 9 vorgesehen sein, so dass die Schicht an einer Seite von der bereits abgelegten Schicht begrenzt wird. Am Rahmen ist weiters eine Düse 10 bewegbar befestigt, die einen flexiblen Schlauch 11 trägt. Die Vorrichtung ist für ein Nassspritzverfahren vorgesehen. Es kann jedoch auch ein Trockenspritzverfahren durchgeführt werden, wobei in diesem Falle die Düse mit zumindest zwei Schlauchleitungen verbunden ist. Die Düse 10 ist entlang einer Querführung 12 über einen hydraulischen Zylinder 13 mit teleskopierbarem Kolben 14. Außerhalb des Bandes sind Klingen 15, 16 angeordnet. Die Klingen erstrecken sich über die gesamte Breite des Bandes. Sie können auch geteilt ausgebildet werden und sind dann stufenförmig in Bewegungsrichtung a gesehen hintereinander angeordnet. Die in Bewegungsrichtung a vor dem Band angeordnete Klinge 15 ist als Rakel ausgebildet, und es kann der Abstand zur Oberfläche 17 der Schicht eingestellt werden. Über einen nicht dargestellten Exzenter wird die vorauseilende Klinge 15 ohne den Abstand zur Wandung 22 zu ändern, hin und her bewegt. Die weitere Klinge 16 läuft dem Band nach und ist am zur Oberfläche der Schicht weisenden Ende gekrümmt ausgebildet. Auch diese Klinge ist höhenveränderlich angeordnet. Die Klinge 16 ist federnd ausgebildet, so dass sie quer zur Bewegungsrichtung a bereits mit geringen Kräften bewegt werden kann.

Die Vorrichtung mit dem endlosen Band gemäß Fig. 3 weist erneut Rollen 2, 3 mit Radnabenmotoren auf, wobei das Band selbst eine elastische Platte 29 aufweist, die über einen Zylinder/Kolben-Antrieb 30, der an den Endbereichen 31 und 32 der elastischen Platte angreift, gebogen werden kann. Es können auch mehrere Antriebe vorgesehen sein, die an verschiedenen Stellen der Platte angreifen. Gleichzeitig werden die Rollen 2, 3 zueinander oder voneinander bewegt, so dass das endlose Band 4 mit Arbeitsfläche 34 weiterhin gespannt ist. Das freie Ende 33 der vorlaufenden Klinge 15 weist einen Normalabstand d₁ zur Tunnelwandung 22 auf, der größer ist, beispielsweise um einige Millimeter, als der Abstand d₂ von der Arbeitsfläche zur Tunnelwandung. Die Klinge kann parallel zur Oberfläche 17 und quer zur Bewegungsrichtung a hin und her bewegt werden. Das freie Ende 35 der nacheilenden Klinge 16 ist nach oben gebogen und liegt mit der Rundung 16a leicht federnd an der Oberfläche 17 der Schicht 17a auf.

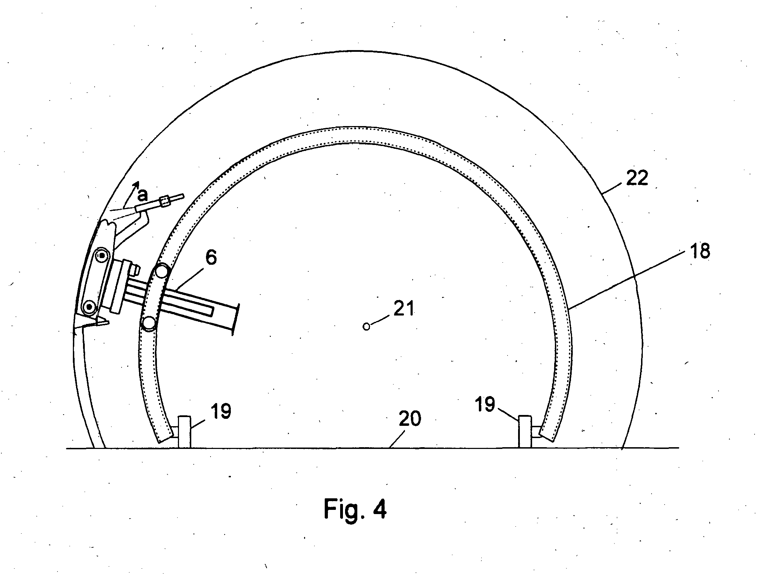

In Fig. 4 ist ein Tunnelquerschnitt dargestellt, in welchem eine Führung 18 für den Halter 6 der Vorrichtung mit dem endlosen Band vorgesehen ist. Die Führung weist Räder 19 auf, die am Boden 20 rollen. Die exakte Ausrichtung der Führung erfolgt über einen Laserstrahl 21 als Leitmedium, der an der Stelle der Tunnelachse ist. Es kann auch als Leiteinrichtung ein gespannter Draht dienen.

Die Führung kann auch mit einem Schreitwerk entlang des Tunnels bewegt werden.

Vergleichsbeispiel:

Eine Mischung für einen Spritzbeton mit 22 Gew.-% Portlandzement, 77,75 Gew.-% eines Zuschlagsstoffes 0/8 mm, 0,15 Gew.-% Additive, u. zw. Luftporenbildner, 0,1 Gew.-% Polypropylenfasern und einer Vorbefeuchtung von 6 Gew.-%, Rest alkalifreier flüssiger Beschleuniger und Wasser. Die Mischung wurde über eine Rotorspritzmaschine einer Düse mit einem Durchmesser von 38 mm zugeführt, in welcher die Spritzbetonmischung mit einem Luftstrahl von 6 bis 7 m³/min beschleunigt wurde. Der W/B-Wert betrug 0,45. Der Schlauch wurde über 0,5 m mit einer Geschwindigkeit von 0,1 m/sec in Abstand von 0,9 m zu einer zu beschichtenden Wandung bewegt. Gleichzeitig wurde die Düse in Beschichtungsrichtung 3 m/min bewegt. Der Winkel zwischen Achse des Sprühstrahles und der Wandung betrug 60°. Die so erhaltene Oberfläche wies eine Schichtstärke zwischen 3,0 cm und 6,0 cm auf. Der Anteil an offenen Poren an der Betonoberfläche gemäß ÖNorm B2211 betrug 5 % mit Porendurchmesser größer 20 mm. Weiters lagen Stege vor. Die angestrebte Schichtstärke war 5 cm.

Beispiel 1:

Der Spritzbeton gemäß Vergleichsbeispiel wurde mit einer Vorrichtung gemäß Fig. 3 aufgebracht. Die Breite des Bandes war 50 cm, die Gesamtlänge 180 cm. Die Vorrichtung wurde mit 3 m/min bewegt und das Band mit einer Geschwindigkeit von 0,97 m/sec in die Gegenrichtung bewegt, so dass das Band auf der Oberfläche der Schicht eine Relativgeschwindigkeit von 0,92 m/sec aufgewiesen hat. Die angestrebte Schichtdicke war 5,0 cm, und es wurde vom Schlauch mit der Düse vor der Rakel geringfügig, u. zw. um 5 mm, mehr in einer Schichtstärke aufgebracht als die später angestrebte Schichtstärke war. Die Rakel wurde mit einer mittleren Geschwindigkeit von 0,1 m/sec über 3 cm hin und her bewegt. Der Abstand des freien Endes der Rakel zur Wandung betrug 5,5 cm, wohingegen der der Arbeitsfläche des endlosen Bandes 5,1 cm betrug. Die Arbeitsfläche des Bandes war parallel zur Wandung. Die nacheilende federnde Klinge lag mit ihrem freien Ende, das 5 cm vor der Wandung endigte, ohne Druck auf der Oberfläche der Schicht auf. Der Anteil an offenen Poren an der Betonoberfläche gemäß ÖNorm B2211 betrug 0,3 % mit einem Porendurchmesser kleiner 15 mm. Es lagen keine Stege vor. Die erhaltene Schicht wies eine Schichtstärke von 4,9 cm bis 5,1 cm auf und war damit wesentlich gleichmäßiger als eine unbehandelte Oberfläche.

Beispiel 2:

Es wurde analog zu Beispiel 1 vorgegangen, wobei eine Schichtstärke von 15 cm angestrebt war. Die Relativgeschwindigkeit des Bandes betrug 0,3 m/sec. Die erhaltene Schichtstärke betrug 14,9 cm bis 15,1 cm, die Rakel wies einen Abstand von 15,5 cm zur Wandung auf. Die Arbeitsfläche hatte einen Abstand von 15,1 cm Wandung, wohingegen die federnde Klinge einen Abstand von 15,0 mm zur Wandung aufwies. Der Anteil an offenen Poren an der Betonoberfläche gemäß ÖNorm B2211 betrug 0,3 % mit einem Porendurchmesser kleiner 15 mm. Es lagen keine Stege vor.

Sowohl im Trockenspritzverfahren als auch im Nassspritzverfahren wurden gleiche Werte erhalten.

## Patentansprüche

1. Vorrichtung zum Auftragen einer abbindbaren Schicht mit einer Oberfläche (17), z. B. mit einer Mischung mit einem anorganischen Bindemittel, Zuschlagsstoffe und Wasser auf Wandungen von Bauteilen, insbesondere Stollen- und/oder Tunnelwandungen (22), mit einem flexiblen Schlauch (11) zum Schleudern einer abbindbaren Mischung, einem in Abstand und entlang der Wandung (22) in zumindest eine Richtung (a) bewegbaren und umlaufbaren und an Rollen (2, 3) umgelenkten endlosen Band mit einer Arbeitsfläche (34), **dadurch gekennzeichnet, dass** benachbart zu den Rollen (2, 3) und außerhalb des endlosen Bandes (4) Klingen (15, 16) vorgesehen sind, die sich im Wesentlichen über eine gesamte Breite des Bandes erstrecken, und mit ihren freien Enden (33, 35) zur Wandung (22) weisen und zur Oberfläche (17) der Schicht (17a) vor und nach dem Band (4) reichen.

2. Vorrichtung nach Anspruch 1, **dadurch gekennzeichnet, dass** die Klingen (15, 16) ungeteilt sind.

3. Vorrichtung nach Anspruch 1 oder 2, **dadurch gekennzeichnet, dass** der flexible Schlauch (11) mit Düse (10) ausgebildet ist.

4. Vorrichtung nach Anspruch 1, 2 oder 3, **dadurch gekennzeichnet, dass** die Klinge (15), die in Richtung der Bewegung (a) der Vorrichtung, gesehen vor dem endlosen Band (4), angeordnet ist, eine Rakel ist.

5. Vorrichtung nach einem der Ansprüche 1 bis 4, **dadurch gekennzeichnet, dass** die Klinge (15), die in Richtung (a) der Bewegung der Vorrichtung gesehen vor dem endlosen Band (4) angeordnet ist, ein freies Ende (33) aufweist, das vor der verlängerten Arbeitsfläche (34) des Bandes (4) endigt.

6. Vorrichtung nach einem der Ansprüche 1 bis 5, **dadurch gekennzeichnet, dass** das freie Ende (33) der Klinge (15), die in Bewegungsrichtung (a) der Vorrichtung gesehen vor dem Band (4) angeordnet ist, quer zur Bewegungsrichtung (a) der Vorrichtung und parallel zu der Oberfläche (17) der Schicht (17a) hin und her bewegbar ist.

7. Vorrichtung nach einem der Ansprüche 1 bis 6, **dadurch gekennzeichnet, dass** die in Richtung der Bewegung (a) der Vorrichtung gesehen nach dem Band (4) angeordnete Klinge (16) in Richtung zur Oberfläche (17) der Schicht (17a) federnd ausgebildet ist.

8. Vorrichtung nach Anspruch 7, **dadurch gekennzeichnet, dass** die federnde Klinge (16) an ihrem freien Ende (35) in Bewegungsrichtung (a) der Vorrichtung gebogen ist, so dass die Klinge (16) mit einer Rundung (16a) an der Schicht anlegbar ist.

9. Vorrichtung nach einem der Ansprüche 1 bis 8, **dadurch gekennzeichnet, dass** die Vorrichtung eine Querführung (12) aufweist, entlang welcher der Schlauch (11) gegebenenfalls mit Düse (10) quer zur Bewegungsrichtung (a) der Vorrichtung hin und her bewegbar ist.

10. Vorrichtung nach einem der Ansprüche 1 bis 9, **dadurch gekennzeichnet, dass** zumindest an einer Seite des endlosen Bandes (4) eine Begrenzung (9), die sich in Bewegungsrichtung (a) der Vorrichtung erstreckt, für die zu bildende Schicht (17a) vorgesehen ist.

11. Vorrichtung nach einem der Ansprüche 1 oder 10, **dadurch gekennzeichnet, dass** die Vorrichtung mit einem endlosen Band (4) entlang einer Führung (18), die sich insbesondere über einen, vorzugsweise gesamten, Querschnitt des Bauteils, des Stollens oder Tunnels erstreckt, bewegbar ist.

12. Vorrichtung nach Anspruch 11, **dadurch gekennzeichnet, dass** die Vorrichtung mit dem endlosen Band (4) über einen Halter (6) entlang der Führung (18) bewegbar ist, mit welchem dieselbe über einen Zylinder/Kolben-Antrieb (23) zur und von der Wandung (22) bewegbar ist.

13. Vorrichtung nach Anspruch 11 oder 12, **dadurch gekennzeichnet, dass** die Führung (18) auf Rädern (19) entlang der Stollen- oder Tunnelachse bewegbar ist.

14. Vorrichtung nach Anspruch 13, **dadurch gekennzeichnet, dass** die Räder (19) direkt am Boden (20) des Bauteils, des Stollens bzw. Tunnels rollen.

15. Vorrichtung nach Anspruch 11, **dadurch gekennzeichnet, dass** die Führung (18) mit einem Schreitwerk bewegbar ist.

16. Vorrichtung nach einem der Ansprüche 11 bis 15, **dadurch gekennzeichnet, dass** eine Leiteinrichtung (21) und/oder Leitmedium für eine Ausrichtung der Bewegung der Führung (18) vorgesehen sind.

17. Vorrichtung nach einem der Ansprüche 1 bis 16, **dadurch gekennzeichnet, dass** die Vorrichtung mit dem Band (4) um eine Achse, die quer zur Führung (18) verläuft und zur Wandung (22) weist, insbesondere um 180°, drehbar verbunden ist.

18. Vorrichtung nach einem der Ansprüche 1 bis 17, **dadurch gekennzeichnet, dass** die Vorrichtung mit zumindest einer weiteren Einheit, z. B. einer Wasserstrahleinheit, mit zumindest einer bewegbaren Düse verbunden ist.

19. Vorrichtung nach einem der Ansprüche 1 bis 18, **dadurch gekennzeichnet, dass** der weiteren Einheit mit zumindest einer Wasserstrahleinrichtung eine Einheit zum Abbau von Einbauten am Bauteil, im Stollen und/oder Tunnel in Bewegungsrichtung gesehen vorgeschaltet ist.

20. Vorrichtung nach Anspruch 19, **dadurch gekennzeichnet, dass** zwischen der Einheit mit der Wasserstrahleinrichtung und der Vorrichtung mit dem endlosen Band eine Einheit für die Befestigung einer Bewehrung vor der Wandung, insbesondere mit Dübeln, vorgesehen ist.

21. Vorrichtung nach einem der Ansprüche 1 bis 20, **dadurch gekennzeichnet, dass** der Abstand der Rollen (2, 3) zueinander veränderlich ist, und/oder mit einer Spannrolle (38) das Band ablenkbar ist, und zwischen diesen eine am Band (4) anliegende elastische Platte (29) vorgesehen ist, wodurch eine Formgebung des Bandes gegenüber der Wandung (22) durchführbar ist.

22. Vorrichtung nach Anspruch 21, **dadurch gekennzeichnet, dass** an die Platte, insbesondere an den Endbereichen (31, 32), gesehen in Bewegungsrichtung der Vorrichtung, der Platte (29) zumindest ein Zylinder/Kolben-Antrieb (30) angreift.

23. Vorrichtung nach einem der Ansprüche 1 bis 22, **dadurch gekennzeichnet, dass** der Abstand der Rollen (2, 3) zueinander veränderlich, und/oder mit einer Spannrolle (38) das Band ablenkbar ist, und eine weitere Rolle (7) zwischen diesen vorgesehen ist, welche gegen das Band (4) drückbar ist, wodurch eine Formgebung des Bandes (4) gegenüber der Wandung (22) durchführbar ist.

24. Verfahren zum Beschichten, insbesondere Verfestigen, von Wandungen (22) von Bauteilen, insbesondere Stollen- und/oder Tunnelwandungen, mit einer Vorrichtung nach einem der Ansprüche 1 bis 23, wobei eine abbindbare Mischung mit anorganischen Bindemitteln, Zuschlagsstoffen und Wasser gegen die Wandung (22) geschleudert wird, und eine an der Wandung haftende Beschichtung gebildet wird, die mit einer zumindest in eine Richtung entlang der Wandung (22) bewegten Vorrichtung mit einem um Rollen (2,3) umlaufenden endlosen Band (4) mit Arbeitsfläche (34) begrenzt wird, **dadurch gekennzeichnet, dass** die Mischung in einer Schichtstärke aufgebracht wird, die größer als ein Normalabstand (d₂) zwischen Wandung (22) und der Arbeitsfläche (34) des endlosen Bandes (4) ist und die Beschichtung vor und nach dem endlosen Band (4) mittels sich über die gesamte Breite erstreckende Klingen egalisiert wird.

25. Verfahren nach Anspruch 24, **dadurch gekennzeichnet, dass** die Geschwindigkeit des umlaufenden Bandes (4) einschließlich der der Vorrichtung gegenüber der an der Wandung haftenden Schicht 0,2 bis 1,0 m/sec beträgt.

26. Verfahren nach Anspruch 24 oder 25, **dadurch gekennzeichnet, dass** in Bewegungsrichtung (a) der Vorrichtung gesehen vor dem endlosen Band (4) eine Schichtstärke (d₁) egalisiert wird, die größer als der Normalabstand (d₂) der Arbeitsfläche (34) zur Wandung (22) ist.

27. Verfahren nach Anspruch 24, 25 oder 26, **dadurch gekennzeichnet, dass** benachbart zur Wandung (22) das umlaufende endlose Band (4) entgegengesetzt zur Bewegungsrichtung der Vorrichtung mit dem umlaufenden Band (4) bewegt wird.

28. Verfahren nach einem der Ansprüche 24 bis 27, **dadurch gekennzeichnet, dass** die Arbeitsfläche (34) in etwa parallel zur Wandung (22) geführt wird.

29. Verfahren nach einem der Ansprüche 24 bis 28, **dadurch gekennzeichnet, dass** die Mischung in Richtung entgegengesetzt zur Schwerkraft aufgebracht wird.

## Claims

1. Device for applying a settable layer having a surface (17), for example with a mixture having an inorganic binder, additives and water to walls of construction elements, especially walls (22) of underground passageways and/or tunnels, having a flexible hose (11) for projection of a settable mixture, an endless belt having a working face (34), which endless belt is guided on rollers (2, 3) and is arranged to move and circulate spaced apart from and along the wall (22) in at least one direction (a), **characterised in that** adjacent to the rollers (2, 3) and outside the endless belt (4) there are provided blades (15, 16) that extend substantially across an entire width of the belt, the free ends (33, 35) of which blades point towards the wall (22) and which blades reach as far as the surface (17) of the layer (17a) before and after the belt (4).

2. Device according to claim 1, **characterised in that** the blades (15, 16) are undivided.

3. Device according to claim 1 or 2, **characterised in that** the flexible hose (11) is provided with a nozzle (10).

4. Device according to claim 1, 2 or 3, **characterised in that** the blade (15) which, seen in the direction of movement (a) of the device, is arranged before the endless belt (4) is a doctor blade.

5. Device according to any one of claims 1 to 4, **characterised in that** the blade (15) which, seen in the direction (a) of movement of the device, is arranged before the endless belt (4) has a free end (33) that terminates in front of the extended working face (34) of the belt (4).

6. Device according to any one of claims 1 to 5, **characterised in that** the free end (33) of the blade (15) which, seen in the direction of movement (a) of the device, is arranged before the endless belt (4) is movable back and forth transversely with respect to the direction of movement (a) of the device and parallel to the surface (17) of the layer (17a).

7. Device according to any one of claims 1 to 6, **characterised in that** the blade (16) which, seen in the direction of movement (a) of the device, is arranged after the belt (4) is constructed so as to be resilient in the direction towards the surface (17) of the layer (17a).

8. Device according to claim 7, **characterised in that** the resilient blade (16) is at its free end (35) curved in the direction of movement (a) of the device, so that the blade (16) is able to rest on the layer by means of a rounded portion (16a).

9. Device according to any one of claims 1 to 8, **characterised in that** the device has a transverse guide means (12) along which the hose (11), where applicable with the nozzle (10), is movable back and forth transversely with respect to the direction of movement (a) of the device.

10. Device according to any one of claims 1 to 9, **characterised in that** at least on one side of the endless belt (4) there is provided a limiting means (9) for the layer (17a) being formed, which limiting means extends in the direction of movement (a) of the device.

11. Device according to either one of claims 1 and 10, **characterised in that** the device with the endless belt (4) is movable along a guide means (18) which extends especially across a cross-section, preferably across the entire cross-section, of the construction element, of the underground passageway or of the tunnel.

12. Device according to claim 11, **characterised in that** the device with the endless belt (4) is movable along the guide means (18) by means of a holder (6) with which the device is movable towards and away from the wall (22) by means of a cylinder-piston drive (23).

13. Device according to claim 11 or 12, **characterised in that** the guide means (18) is movable on wheels (19) along the axis of the underground passageway or tunnel.

14. Device according to claim 13, **characterised in that** the wheels (19) roll directly on the base (20) of the construction element, of the underground passageway or of the tunnel.

15. Device according to claim 11, **characterised in that** the guide means (18) is movable with a walking mechanism.

16. Device according to any one of claims 11 to 15, **characterised in that** a directing device (21) and/or directing medium is provided for aligning the movement of the guide means (18).

17. Device according to any one of claims 1 to 16, **characterised in that** the device with the belt (4) is connected so as to be rotatable, especially through 180°, about an axis that runs transversely with respect to the guide means (18) and points towards the wall (22).

18. Device according to any one of claims 1 to 17, **characterised in that** the device is connected to at least one further unit, for example a water-jet unit, having at least one movable nozzle.

19. Device according to any one of claims 1 to 18, **characterised in that** there is arranged upstream of the further unit with at least one water-jet device, seen in the direction of movement, a unit for dismantling fixtures on the construction element, in the underground passageway and/or in the tunnel.

20. Device according to claim 19, **characterised in that** between the unit with the water-jet device and the device with the endless belt there is provided a unit for fixing reinforcement means in front of the wall, especially with dowels.

21. Device according to any one of claims 1 to 20, **characterised in that** the spacing of the rollers (2, 3) from one another can be altered and/or the belt can be diverted by means of a tensioning roller (38) and there is provided therebetween a resilient plate (29) that rests against the belt (4), with the result that shaping of the belt with respect to the wall (22) can be carried out.

22. Device according to claim 21, **characterised in that** at least one cylinder-piston drive (30) acts on the plate, especially on the end regions (31, 32) of the plate (29), seen in the direction of movement of the device.

23. Device according to any one of claims 1 to 22, **characterised in that** the spacing of the rollers (2, 3) from one another can be altered and/or the belt can be diverted by means of a tensioning roller (38) and there is provided therebetween a further roller (7) which can be pressed against the belt (4), with the result that shaping of the belt (4) with respect to the wall (22) can be carried out.

24. Method of coating, especially strengthening, walls (22) of construction elements, especially walls of underground passageways and/or tunnels, with a device according to any one of claims 1 to 23, wherein a settable mixture having inorganic binders, additives and water is projected towards the wall (22) and a coating adhering to the wall is formed, which coating is limited by a device moved along the wall (22) in at least one direction, which device has an endless belt (4) having a working face (34) and circulating around rollers (2, 3), **characterised in that** the mixture is applied in a layer thickness that is greater than a normal spacing (d₂) between the wall (22) and the working face (34) of the endless belt (4) and the coating is levelled before and after the endless belt (4) by means of blades that extend across the entire width.

25. Method according to claim 24, **characterised in that** the speed of the circulating belt (4), including that of the device, relative to the layer adhering to the wall is from 0.2 to 1.0 m/sec.

26. Method according to claim 24 or 25, **characterised in that**, seen in the direction of movement (a) of the device, before the endless belt (4) a layer thickness (d₁) that is greater than the normal spacing (d₂) of the working face (34) from the wall (22) is levelled.

27. Method according to claim 24, 25 or 26, **characterised in that**, adjacent to the wall (22), the circulating endless belt (4) is moved in the opposite direction to the direction of movement of the device with the circulating belt (4).

28. Method according to any one of claims 24 to 27, **characterised in that** the working face (34) is guided approximately parallel to the wall (22).

29. Method according to any one of claims 24 to 28, **characterised in that** the mixture is applied in the opposite direction to gravity.

## Revendications

1. Dispositif destiné à l'application d'une couche retirable avec une surface (17), par exemple avec un mélange présentant un liant anorganique, des agrégats et de l'eau sur des parois d'éléments de construction, en particulier des parois de galerie et/ou de tunnel (22), avec un tuyau flexible (11) pour projeter un mélange retirable, une bande sans fin renvoyée sur des rouleaux (2, 3) et pouvant circuler et mobile à distance et le long de la paroi (22) dans au moins une direction (a) avec une surface de travail (34), **caractérisé en ce que** des lames (15, 16) sont prévues de manière contiguë aux rouleaux (2, 3) et en dehors de la bande sans fin (4), lesquelles s'étendent sensiblement sur une largeur entière de la bande, et dont les extrémités libres (33, 35) sont dirigées vers la paroi (22) et atteignent la surface (17) de la couche (17a) avant et après la bande (4).

2. Dispositif selon la revendication 1, **caractérisé en ce que** les lames (15, 16) sont en une pièce.

3. Dispositif selon la revendication 1 ou 2, **caractérisé en ce que** le tuyau flexible (11) est réalisé avec une buse (10).

4. Dispositif selon la revendication 1, 2 ou 3, **caractérisé en ce que** la lame (15) qui est disposée dans le sens de déplacement (a) du dispositif, vu avant la bande sans fin (4), est une racle.

5. Dispositif selon l'une quelconque des revendications 1 à 4, **caractérisé en ce que** la lame (15) qui est disposée dans le sens de déplacement (a) du dispositif, vu avant la bande sans fin (4), présente une extrémité libre (33) qui se termine avant la surface de travail (34) prolongée de la bande (4).

6. Dispositif selon l'une quelconque des revendications 1 à 5, **caractérisé en ce que** l'extrémité libre (33) de la lame (15) qui est disposée dans le sens de déplacement (a) du dispositif, vu avant la bande (4), est mobile alternativement transversalement au sens de déplacement (a) du dispositif et parallèlement à la surface (17) de la couche (17a).

7. Dispositif selon l'une quelconque des revendications 1 à 6, **caractérisé en ce que** la lame (16) disposée dans le sens de déplacement (a) du dispositif, vu après la bande (4), est réalisée élastique en direction de la surface (17) de la couche (17a).

8. Dispositif selon la revendication 7, **caractérisé en ce que** la lame élastique (16) est pliée sur son extrémité libre (35) dans le sens de déplacement (a) du dispositif de sorte que la lame (16) puisse être placée avec un arrondi (16a) sur la couche.

9. Dispositif selon l'une quelconque des revendications 1 à 8, **caractérisé en ce que** le dispositif présente un guidage transversal (12), le long duquel le tuyau (11) éventuellement avec une buse (10) peut être déplacé alternativement transversalement dans le sens de déplacement (a) du dispositif.

10. Dispositif selon l'une quelconque des revendications 1 à 9, **caractérisé en ce qu'**une délimitation (9) qui s'étend dans le sens de déplacement (a) du dispositif, pour la couche à former (17a) est prévue au moins sur un côté de la bande sans fin (4).

11. Dispositif selon l'une quelconque des revendications 1 ou 10, **caractérisé en ce que** le dispositif peut être déplacé avec une bande sans fin (4) le long d'un guidage (18) qui s'étend en particulier sur une section de préférence entière de l'élément de construction de la galerie ou du tunnel.

12. Dispositif selon la revendication 11, **caractérisé en ce que** le dispositif peut être déplacé avec la bande sans fin (4) par le biais d'un support (6) le long du guidage (18), avec lequel support celui-ci peut être approché et éloigné de la paroi (22) par un entraînement à cylindre et piston (23).

13. Dispositif selon la revendication 11 ou 12, **caractérisé en ce que** le guidage (18) peut être déplacé sur des roues (19) le long de l'axe de la galerie ou du tunnel.

14. Dispositif selon la revendication 13, **caractérisé en ce que** les roues (19) tournent directement sur le fond (20) de l'élément de construction de la galerie ou du tunnel.

15. Dispositif selon la revendication 11, **caractérisé en ce que** le guidage (18) peut être déplacé avec des patins.

16. Dispositif selon l'une quelconque des revendications 11 à 15, **caractérisé en ce qu'**un système de guidage (21) et/ou support de guidage est prévu pour une orientation du mouvement de guidage (18).

17. Dispositif selon l'une quelconque des revendications 1 à 16, **caractérisé en ce que** le dispositif est relié à la bande (4) de manière à pouvoir tourner autour d'un axe qui s'étend transversalement au guidage (18) et est dirigé vers la paroi (22), en particulier de 180°.

18. Dispositif selon l'une quelconque des revendications 1 à 17, **caractérisé en ce que** le dispositif est relié à au moins une autre unité, par exemple une unité à jet d'eau avec au moins une buse mobile.

19. Dispositif selon l'une quelconque des revendications 1 à 18, **caractérisé en ce qu'**une unité pour le démontage d'objets installés sur l'élément de construction, dans la galerie et/ou le tunnel vu dans le sens de déplacement est placée en amont de l'autre unité avec au moins un dispositif à jet d'eau.

20. Dispositif selon la revendication 19, **caractérisé en ce qu'**une unité pour la fixation d'une armature avant la paroi, en particulier avec des chevilles est prévue entre l'unité avec le dispositif à jet d'eau et le dispositif avec la bande sans fin.

21. Dispositif selon l'une quelconque des revendications 1 à 20, **caractérisé en ce que** la distance entre les rouleaux (2, 3) est modifiable et/ou la bande peut être déviée avec un rouleau de tension (38), et une plaque (29) élastique reposant contre la bande (4) est prévue entre ceux-ci, ce qui permet de réaliser une formation de la bande par rapport à la paroi (22).

22. Dispositif selon la revendication 21, **caractérisé en ce qu'**au moins un entraînement à cylindre et piston (30) agit sur la plaque, en particulier sur les zones d'extrémité (31, 32), vu dans le sens de déplacement du dispositif, de la plaque (29).

23. Dispositif selon l'une quelconque des revendications 1 à 22, **caractérisé en ce que** la distance entre les rouleaux (2, 3) est modifiable, et/ou la bande peut être déviée avec un rouleau de tension (38), et un autre rouleau (7) est prévu entre ceux-ci, lequel peut être pressé contre la bande (4), ce qui permet de réaliser une formation de la bande (4) par rapport à la paroi (22).

24. Procédé de revêtement, en particulier de consolidation de parois (22) d'éléments de construction, en particulier de parois de galerie et/ou de tunnel, avec un dispositif selon l'une quelconque des revendications 1 à 23, un mélange retirable présentant des liants anorganiques, des agrégats et de l'eau étant projeté contre la paroi (22), et un revêtement adhérant sur la paroi étant formé, lequel est délimité avec un dispositif déplacé au moins dans une direction le long de la paroi (22) avec une bande sans fin (4) tournant sur des rouleaux (2, 3) avec une surface de travail (34), **caractérisé en ce que** le mélange est appliqué dans une épaisseur de couche qui est plus grande qu'une distance normale (d₂) entre la paroi (22) et la surface de travail (34) de la bande sans fin (4) et le revêtement est égalisé avant et après la bande sans fin (4) à l'aide de lames s'étendant sur la largeur entière.

25. Procédé selon la revendication 24, **caractérisé en ce que** la vitesse de la bande tournante (4), y compris du dispositif, par rapport à la couche adhérant sur la paroi est comprise entre 0,2 et 1 m/s.

26. Procédé selon la revendication 24 ou 25, **caractérisé en ce qu'**une épaisseur de couche (d₁) est égalisée vu dans le sens de déplacement (a) du dispositif avant la bande sans fin (4), laquelle épaisseur est plus grande que la distance normale (d₂) entre la surface de travail (34) et la paroi (22).

27. Procédé selon la revendication 24, 25 ou 26, **caractérisé en ce que** la bande sans fin tournante (4) est déplacée de manière contiguë à la paroi (22) à l'opposé du sens de déplacement du dispositif avec la bande tournante (4).

28. Procédé selon l'une quelconque des revendications 24 à 27, **caractérisé en ce que** la surface de travail (34) est guidée à peu près parallèlement à la paroi (22).

29. Procédé selon l'une quelconque des revendications 24 à 28, **caractérisé en ce que** le mélange est appliqué en direction opposée à la force de gravité.
